# EUROPÄISCHE PATENTSCHRIFT

(11) **EP 0 799 167 B1**
(45) Veröffentlichungstag und Bekanntmachung des Hinweises auf die Patenterteilung: **14.07.1999**
(21) Anmeldenummer: 95936920.8
(22) Anmeldetag: 27.11.1995
(51) Int. Cl.: C04B 38/00, C04B 38/10

(54) **BAUWERKSTOFF MIT GERINGEREN SCHWINDMASSEN**
LOW-SHRINKAGE BUILDING MATERIAL
MATERIAU DE CONSTRUCTION A RETRAIT REDUIT

(30) Priorität: 21.12.1994 CH 387194
(43) Veröffentlichungstag der Anmeldung: 08.10.1997
(73) Patentinhaber: Fehlmann, Hans Beat, 6318 Walchwil (CH)
(72) Erfinder: Fehlmann, Hans Beat, 6318 Walchwil (CH)
(74) Vertreter: Troesch Scheidegger Werner AG
(86) Internationale Anmeldenummer: CH9500277
(87) Internationale Veröffentlichungsnummer: WO9619418

(56) Entgegenhaltungen:
- EP-A- 0 647 603
- WO-A-92/02469
- AU-A- 4 488 772
- FR-A- 2 561 638
- FR-A- 2 568 247

## Beschreibung

Die vorliegende Erfindung betrifft einen Bau- und Konstruktionswerkstoff für das Verarbeiten unter Aushärtung, im wesentlichen bestehend aus Bindemitteln, vorzugsweise einem Reaktivbindemittel und wenigstens weitgehendst mineralischen Füllstoffen, ein Verfahren zur Herstellung eines Bau- und Konstruktionswerkstoffes sowie ein Verfahren zur Reduktion des Schwindmasses in einem Bau- und Konstruktionswerkstoff.

Die vorliegende Erfindung ist eine Weiterentwicklung der hängigen veröffentlichten EP-Patentanmeldung 0 647 603, in welcher ein Konstruktions- und Bauwerkstoff, wie insbesondere Beton, vorgeschlagen wird, welcher gleichmässig verteilte Mikroporen aufweist. Diese Feinstporen weisen einen Durchmesser in einem Bereich von ca. 0,01 µ bis ca. 5µ auf, wobei die einzelnen Poren vorzugsweise in sich geschlossen sind.

Mittels dieser erfindungsgemäss vorgeschlagenen Massnahme können Bauten bzw. Bauwerksteile erstellt werden mit wesentlich höherer Festigkeit am Bauwerk, verglichen mit der Verwendung von herkömmlichem Beton. Der Anteil Mikroporen umfasst dabei in etwa die Menge Luft, welche üblicherweise bei sogenannten Frostschutzmassnahmen in Form von Makroporen im Beton eingebaut wird, wobei jedoch im Gegensatz dazu beim Einbauen der Mikroporen, wie erwähnt, die Festigkeit wesentlich erhöht werden kann.

Diese Mikroporen werden erhalten, indem das Bindemittel bzw. der Reaktivmatrixwerkstoff, wie insbesondere Zement, zusammen mit Additiven, wie beispielsweise Tensiden und Wasser in einem konventionellen Mischer oder in einem Hochturbulenzmischer, gemischt werden, um anschliessend oder direkt in einem Arbeitsgang in einem herkömmlichen Betonmischer mit dem Zuschlagstoff, wie Sand und Kies, gemischt zu werden. Falls keine Additive verwendet werden, muss in jedem Fall ein Hochturbulenzmischer verwendet werden, währenddem bei der Verwendung von Additiven, wie beispielsweise den erwähnten Tensiden das Mischen des Zementes mit dem Wasser in einem konventionellen Mischer erfolgen kann.

Die erfindungsgemäss vorgeschlagene Massnahme des Einbauens von Mikroporen findet insbesondere Anwendung für das Herstellen von sogenannten Leichtbauwerkstoffen, wie insbesondere enthaltend Leichtfüllstoffe, indem durch die Erhöhung der Festigkeit des die Füllstoffe einhüllenden Betons auch der schlussendlich resultierende Leichtbauwerkstoff eine ausreichende Festigkeit aufweist.

Die Aufgabe der vorliegenden Erfindung besteht nun darin, Bau- und Konstruktionswerkstoffe in Form von Schwerbauwerkstoffen, wie insbesondere Schwerbeton oder konventionellem Beton zu schaffen, umfassend ein Reaktivbindemittel und mineralische Füllstoffe, mit erhöhter Festigkeit sowie geringem Schwund bei deren Verarbeitung.

Erfindungsgemäss wird die gestellte Aufgabe mittels eines Bau- und Konstruktionswerkstoffes gemäss dem Wortlaut nach Anspruch 1 gelöst.

Vorgeschlagen wird, dass der für das Verarbeiten unter Aushärtung vorgeschlagene Mikroporen enthaltende Bau- und Konstruktionswerkstoff, umfassend ein Bindemittel, wie vorzugsweise ein Reaktivbindemittel, Füllstoffe, wie vorzugsweise mineralische Füllstoffe, enthält, welche frei von Feinstkornanteilen < 0,2 mm sind. Durch das Weglassen von Feinstkornanteilen können Schwindmasse erzielt werden, in der Grössenordnung von ca. 0,1 - 0,3 Promille. Ein derart kleines Schwindmass ist gerade in der hochgespannten Betontechnik (Brücken, Decken, sehr elegante, schlanke Bauten, etc.) sehr gefragt, einerseits, um hohe Festigkeit zu erreichen, andererseits um durch das Schwinden nicht sogenannte Schwindrisse zu erzeugen, und damit das Bauwerk zu gefährden.

Aus dem Stand der Technik ist eine Reihe von Schriften bekannt, welche gerade die gegenteilige Meinung vertreten. In der Regel wird vorgeschlagen, mehlkornreichere Betone zu verwenden, um möglichst kleinste Schwindmasse zu erhalten, wobei ein erhöhter Anteil an Fein- und Mehlkorn nicht als negativ beurteilt wird. Als auslösende Einflussgrössen für das Schwinden von Zementstein, Mörtel und Beton werden im wesentlichen das Lagerungsklima, dem der Beton ausgesetzt wird, sowie in Ausnahmefällen die Zusammensetzung des Zementes genannt. Auch ein Feuchthalten des Betons ist wichtig.

Aus diesem Grunde ist es eher überraschend, dass eine substantielle Reduktion des Schwindens durch Reduktion der Feinstkornanteile in den Füllstoffen bzw. Zuschlagstoffen in zu verarbeitendem Beton erreicht werden kann. Wie bereits oben angeführt, wird erfindungsgemäss gefordert, mindestens Fein- und Mehlkornanteile aus dem Zuschlagstoff zu entfernen, welche einen Durchmesser aufweisen von < 0,2 mm. Gegebenenfalls kann es aber auch vorteilhaft sein, selbst Feinstanteile von < 0,5 oder gar > bis zu 1,0 mm aus dem Zuschlagstoff zu entfernen. Damit kann das Schwindmass von in der Regel von 0,5 - 1 Promille in herkömmlichem Beton auf die oben erwähnten 0,1 - 0,3 Promille reduziert werden.

Die erfindungsgemäss vorgeschlagene Massnahme der Verwendung von Zuschlagstoff ohne Feinstanteile lässt sich ausgezeichnet kombinieren mit der in der eingangs erwähnten EP-Patentanmeldung 0 647 603 vorgeschlagenen Massnahme, gemäss welcher im erfindungsgemässen Bau- und Konstruktionswerkstoff zusätzlich Mikroporen vorzusehen sind. Mikroporöser Beton besitzt bekanntlich die Eigenschaft, dass durch die Mikroporosität die Festigkeit des Zementgefüges wesentlich stärker wird, d.h. die Biegezug- und Druckfestigkeit steigt um ein Mehrfaches gegenüber einer nicht mikroporösen Zementmasse an. Dass dabei gleichzeitig das spezifische Gewicht infolge Einbauens von Feinstlufteinschlüssen reduziert werden kann, ist eine weitere vorteilhafte Eigenschaft von mikroporösem Beton. So wurde festgestellt, dass die Verwendung einer Wasser/Zementmischung, gegebenenfalls beinhaltend Additive, wie Tenside, mit mikroporösen Einschlüssen und das Mischen mit Zuschlagstoffen, wie Sand und Kies, bei Weglassen von Feinstkorn (Mehlkorn und Korn bis teilweise 0,5 mm, bei gewissen Sorten auch bis 1 mm) dazu führt, dass höhere Festigkeiten und auch ein bedeutend kleineres Schwindmass erreicht werden kann als mit bisherigen, herkömmlichen Methoden. Unter Beigabe von Sand und Kies für hochwertigen Schwer- oder Normalbeton (spezifisches Gewicht ca. 2,3 - 2,5) zeigen sich Schwindmasse in der Grössenordnung von ca. 0,1 - 0,3 Promille bei der Zugabe von mikroporösem Zementschleim, und zwar ohne Zugabe von Silikatstaub und anderen Produkten. Allerdings muss ergänzend festgehalten werden, dass ein Feuchthalten des Betons nach wie vor noch bessere Resultate, in bezug auf das Schwindmass, ergibt.

Die Mikroporösität, welche beispielsweise durch Mischen von Zementschleim in einem Hochturbulenzmischer oder unter Verwendung von speziellen Additiven, insbesondere Tensiden, erhalten wird, bringt eklatante Verbesserungen der Betonqualität hinsichtlich Festigkeit, Schwindmass, Frostfestigkeit, chemischer Beständigkeit und auch Preis. Durch die hohe, grosse Zementschleimmasse, die mit Luft angefüllt ist und volumenmässig ca. 4 - 7 % des gesamten Betonvolumens ausmacht, wirkt diese Porigkeit als Kugellager, d.h. die Verarbeitbarkeit wird wesentlich besser. Das Ausbreitmass kann hochgehalten werden, unter Einhaltung von niedrigsten Wasser/Zement-Faktoren. Zudem wird durch die Feinstporigkeit kein Zementschleim gegen die Mehlkornoberfläche, die proportional sehr hoch ist, gebunden. Der Zement kann also voll wirken.

Durch das Weglassen der Feinstanteile im Zuschlagstoff wird die Oberfläche des Zuschlagstoffes stark reduziert, wodurch der Zuschlagstoff wenigstens nahezu vollständig vom Zement eingehüllt bzw. umschlossen wird. Damit bildet der Zement eine praktisch vollständig zusammenhängende Matrixstruktur, womit auch die hohe Festigkeit des Zementes, beinhaltend die Mikroporen, vollständig zum Tragen kommt. Damit kann Feinkies, z.B. von 0,5 - 8 mm oder 0,5 - 6 mm verwendet werden, ohne dass sich die einzelnen Kieskörper berühren, wodurch sie im Zementschleim schwimmen. So ergeben sich im Beton sehr gute Eigenschaften.

Die Mikroporigkeit bedeutet somit auch im Schwerbeton einen grossen Schritt vorwärts Richtung Qualitätsbeton und wird gerade bei Ausbruchmaterial, wie es im Stollenbau oder beim Fräsen anfällt, verwendet. Dies insbesondere deswegen, weil das Korn relativ klein ist, womit nach alten Betontheorien kein vernünftiger Beton hergestellt werden kann.

Die Erfindung wird nun anschliessend beispielsweise unter Bezug auf einige angefügte Beispiele näher erläutert.

### 1. Herstellung von Mikroporen beinhaltendem "Zementschleim":

2 kg Zement wurden mit 0,6 l Wasser in einem Hochturbulenzmischer bei ca. 1500 Umdrehungen pro Minute gemischt, und schlussendlich Prüfkörper hergestellt. Die an den Prüfkörpern festgestellte mittlere Druckfestigkeit betrug 74,1 N/mm². Vergleichsweise beträgt die mittlere Druckfestigkeit an einem Betonprüfkörper ohne eingeschlossene Mikroporen ca. 20 - 25 N/mm².

Eine weitere Mischung von 2 kg Zement und 0,5 l Wasser sowie der Beigabe von 0,04 kg eines tensidischen Additivs wurden in einem herkömmlichen Mischer gemischt und anschliessend Formkörper hergestellt. An diesen konnte eine mittlere Druckfestigkeit von 75,0 N/mm² gemessen werden.

Schlussendlich wurden 2 kg Zement mit 0,45 l Wasser und 0,04 kg eines tensidischen Additives in einem herkömmlichen Mischer gemischt und erneut ein Formkörper hergestellt. An diesem konnte eine mittlere Druckfestigkeit von 81,8 N/mm² festgestellt werden. Da in der Regel bei Alterung die mittlere Druckfestigkeit noch um ca. 25 % zunimmt kann somit eine Enddruckfestigkeit von über 100 N/mm² erwartet werden.

Die vorliegenden Beispiele zeigen, dass durch das Einschliessen von Mikroporen, mechanisch oder chemisch erzeugt, die Druckfestigkeit um ca. einen Faktor 3 - 4 erhöht werden kann. Dabei zeigt sich weiter, dass insbesondere ein niedriger Wasser/Zement-Faktor, wie im Fall des letzten Beispieles von 0,225, eine weitere Steigerung der Druckfestigkeit ergibt. Auf das Schwindmass jedoch bleibt der Wasser/Zement-Faktor weitgehendst ohne Einfluss.

### 2. Schwindmassmessung:

13 kg Zement wurden mit 5 l Wasser in einem Hochturbulenzmischer bei 1500 Umdrehungen pro Minute gemischt. Anschliessend wurde der Zementschleim mit je 40 kg Sand 0,5 - 4 mm und Kies 4 - 8 mm in einem herkömmlichen Mischer gemischt und bei Temperaturen im Bereich von 15 - 20°C verarbeitet.

Das am ausgehärteten Formkörper gemessene Schwindmass lag deutlich unter 0,2 Promille.

Eine weitere Mischung von ebenfalls 13 kg Zement und 5 l Wasser sowie 0,3 kg eines tensidischen Additivs wurde in einem herkömmlichen Mischer gemischt, wobei anschliessend zur Mischung dieselben Mengen Zuschlagstoffe, wie oben angeführt, zugegeben wurden. Erneut wurde der so hergestellte Beton gegossen und an den ausgehärteten Formkörpern wurden erneut Schwindmasse von deutlich unter 0,2 Promille gemessen.

Damit zeigt sich deutlich, dass durch die Kombination des Einschliessens der Mikroporen und durch die Verwendung von Zuschlagstoffen ohne Feinstanteile einerseits die Festigkeit im Beton wesentlich erhöht werden kann, und zusätzlich das Schwindmass stark reduziert werden kann. Dabei wird die Reduktion des Schwindmasses gänzlich, ohne Zugabe von Silikatstaub und anderen Produkten erzielt. Im übrigen wird auf die noch nicht veröffentlichte CH 3046/93-1, deren Inhalt in Kombination mit der Massnahme des Weglassens der Feinstanteile im Zuschlagstoff, ebenfalls als Teil der vorliegenden Erfindung zu betrachten ist, verwiesen.

## Patentansprüche

1. Bau- und Konstruktionswerkstoff für das Verarbeiten unter Aushärtung, im wesentlichen bestehend aus Bindemitteln, vorzugsweise einem Reaktivbindemittel und wenigstens weitgehendst mineralischen Füllstoffen, dadurch gekennzeichnet, dass das Bindemittelfüllstoffgemisch weitgehendst gleichmässig verteilte Mikroporen aufweist mit einem Durchmesser von ca. 0,01µ bis ca. 5µ, wobei die Poren in sich geschlossen sind und dass der oder die mineralischen Füllstoffe weitgehendst frei von Feinstkornanteilen < 0,2 mm sind.

2. Bau- und Konstruktionswerkstoff nach Anspruch 1, dadurch gekennzeichnet, dass der oder die Füllstoffe weitgehendst frei von Feinstkornanteilen < 0,3 mm, vorzugsweise < 0,5 mm sind.

3. Bau- und Konstruktionswerkstoff nach Anspruch 1, dadurch gekennzeichnet, dass der oder die mineralischen Füllstoffe weitgehendst frei von Feinstkornanteilen < 0,8 mm, vorzugsweise 1 mm sind.

4. Bau- und Konstruktionswerkstoff, insbesondere nach einem der Ansprüche 1 - 3, dadurch gekennzeichnet, dass das Reaktivbindemittel ein mineralischer Werkstoff ist, wie insbesondere Zement, und dass der mineralische Füllstoff weitgehendst aus Sand und Kies besteht.

5. Bau- und Konstruktionswerkstoff, insbesondere nach Anspruch 4, dadurch gekennzeichnet, dass das Bindemittel zusätzlich Kalk enthält.

6. Verfahren zur Herstellung eines Bau- und Konstruktionswerkstoffes nach einem der Ansprüche 1 - 5, dadurch gekennzeichnet, dass mindestens ein Reaktivbindemittel, wie beispielsweise ein Wasser/Zementgemisch in einem Hochturbulenzmischer zum Bilden von Mikroporen gemischt wird und anschliessend mit mindestens einem mineralischen Füllstoff, dessen Feinstanteile mit einem Korndurchmesser < 0,2 mm entfernt worden sind, gemischt wird.

7. Verfahren zur Herstellung eines Bau- und Konstruktionswerkstoffes nach einem der Ansprüche 1 - 5, dadurch gekennzeichnet, dass ein Zement/Wassergemisch zusammen mit weiteren Additiven, wie beispielsweise Tensiden, in einem Mischer zur Bildung von Mikroporen gemischt wird, um anschliessend mit mineralischen Füllstoffen, wie Kies und Sand, gemischt zu werden, welchem Füllstoff vor dem Mischen die Feinstkornanteile von < 0,2 mm, vorzugsweise < 0,25 mm, wenigstens teilweise entfernt werden.

8. Verfahren, insbesondere nach einem der Ansprüche 6 oder 7, dadurch gekennzeichnet, dass ein Wasser/Zementverhältnis von ca. 0,22 - ca. 0,4, vorzugsweise ca. 0,25 - 0,31 verwendet wird.

9. Verfahren, insbesondere nach einem der Ansprüche 7 oder 8, dadurch gekennzeichnet, dass dem Zement Kalk beigefügt wird.

10. Verfahren, insbesondere nach einem der Ansprüche 6 - 9, dadurch gekennzeichnet, dass Feinstkornanteile von < 0,5 mm, vorzugsweise < 0,8 mm aus dem mineralischen Füllstoff entfernt werden.

11. Verfahren zur Reduktion des Schwindmasses in einem Bau- und Konstruktionswerkstoff, im wesentlichen bestehend aus einem Reaktivbindemittel und einem oder mehreren Zuschlag stoffen, wie insbesondere einem Beton, dadurch gekennzeichnet, dass das Reaktivbindemittel durch Mischen, gegebenenfalls in einem Hochturbulenzmischer und/oder durch Verwenden von tensidischen Additiven gleichmässig mit Mikroporen in der Grösse von ca. 0,01 µ bis ca. 5 µ versetzt wird, und anschliessend das mit Mikroporen versetzte Reaktivbindemittel mit einem oder mehreren Zuschlagstoffen versetzt wird, welcher bzw. welche Zuschlagstoff(-e) frei von Feinstanteilen ist bzw. sind, mit einer Korngrösse < 0,2 mm, vorzugsweise < 0,25 mm.

## Claims

1. A building and construction material for processing while maturing, consisting essentially of binders, preferably a reactive binder and at least substantially mineral fillers, characterised in that the binder filler mixture has substantially uniformly distributed micropores with a diameter of about 0.01 µ to about 5 µ, the pores being closed upon themselves, and in that the mineral filler or fillers is/are substantially free of superfine particle fractions <0.2 mm.

2. A building and construction material according to claim 1, characterised in that the filler or fillers is/are substantially free of superfine particle fractions <0,3 mm, preferably <0.5 mm.

3. A building and construction material according to claim 1, characterised in that the mineral filler or fillers is/are substantially free of superfine particle fractions <0.8 mm, preferably 1 mm.

4. A building and construction material according to any one of claims 1 - 3, characterised in that the reactive binder is a mineral material, such as, in particular, cement, and in that the mineral filler consists substantially of sand and gravel.

5. A building and construction material, more particularly according to claim 4, characterised in that the binder additionally contains lime.

6. A process for the preparation of a building and construction material according to any one of claims 1 to 5, characterised in that at least one reactive binder, such as, for example, a water/cement mixture, is mixed in a high-turbulence mixer to form micropores and then mixed with at least one mineral filler, the superfine fractions of which having a particle diameter <0.2 mm have been removed.

7. A process for the preparation of a building and construction material according to any one of claims 1 to 5, characterised in that a cement/water mixture is mixed together with other additives, such as, for example, surfactants, in a mixer to form micropores, and is then mixed with mineral fillers, such as gravel and sand, the superfine particle fractions of <0.2 mm, preferably <0.25 mm, having been at least partially removed from the filler before the mixing.

8. A process, more particularly according to claim 6 or 7, characterised in that a water/cement ratio of about 0.22 - about 0.4, preferably about 0.25 - 0.31, is used.

9. A process, more particularly according to claim 7 or 8, characterised in that lime is added to the cement.

10. A process, more particularly according to any one of claims 6 to 9, characterised in that superfine particle fractions of <0.5 mm, preferably <0.8 mm, are removed from the mineral filler.

11. A process for reducing shrinkage in a building and construction material, consisting essentially of a reactive binder and one or more aggregates, such as, more particularly, a concrete, characterised in that micropores of the order of about 0.01 µ to about 5 µ are uniformly dispersed in the reactive binder by mixing, if required in a high-turbulence mixer and/or by the use of surfactant additives, and then one or more aggregates is/are added to the reactive binder in which the micropores have been dispersed, said aggregate or aggregates being free of superfine fractions with a particle size <0.2 mm, preferably <0.25 mm.

## Revendications

1. Matériau de construction pour une transformation avec durcissement, composé essentiellement de liants, de préférence d'un liant réactif, et de matières de remplissage au moins largement minérales, caractérisé en ce que le mélange liant-matière de remplissage comporte des micropores à répartition très largement uniforme, d'un diamètre d'environ 0,01 µ à environ 5 µ, les pores étant fermés, et en ce que la ou les matières de remplissage minérales sont très largement exemptes de fractions très fines < 0,2 mm.

2. Matériau de construction selon la revendication 1, caractérisé en ce que la ou les matières de remplissage sont très largement exemptes de fractions très fines < 0,3 mm, de préférence < 0,5 mm.

3. Matériau de construction selon la revendication 1, caractérisé en ce que la ou les matières de remplissage minérales sont très largement exemptes de fractions très fines < 0,8 mm, de préférence 1 mm.

4. Matériau de construction, en particulier selon l'une des revendications 1 à 3, caractérisé en ce que le liant réactif est un matériau minéral, notamment du ciment, et en ce que la matière de remplissage minérale se compose très largement de sable et de gravier.

5. Matériau de construction, en particulier selon la revendication 4, caractérisé en ce que le liant contient en supplément de la chaux.

6. Procédé pour fabriquer un matériau de construction selon l'une des revendications 1 à 5, caractérisé en ce qu'au moins un liant réactif comme par exemple un mélange eau/ciment est mélangé dans un mélangeur à haute turbulence pour former des micropores, puis est mélangé à au moins une matière de remplissage minérale dont les fractions très fines d'un diamètre de grain < 0,2 mm ont été éliminées.

7. Procédé pour fabriquer un matériau de construction selon l'une des revendications 1 à 5, caractérisé en ce qu'un mélange ciment/eau est mélangé dans un mélangeur avec d'autres additifs, comme par exemple des agents tensio-actifs, pour former des micropores, afin d'être mélangé ensuite à des matières de remplissage minérales comme du gravier et du sable, qui sont au moins partiellement débarrassées des fractions très fines < 0,2 mm, de préférence < 0,25 mm, avant le mélange.

8. Procédé en particulier selon la revendication 6 ou 7, caractérisé en ce qu'on utilise un rapport eau/ciment d'environ 0,22-0,4, de préférence d'environ 0,25-0,31.

9. Procédé en particulier selon la revendication 7 ou 8, caractérisé en ce qu'on ajoute de la chaux au ciment.

10. Procédé en particulier selon l'une des revendications 6 à 9, caractérisé en ce que les fractions très fines < 0,5 mm, de préférence < 0,8 mm, sont éliminées de la matière de remplissage.

11. Procédé pour réduire le retrait dans un matériau de construction composé essentiellement d'un liant réactif et d'un ou plusieurs granulats, notamment du béton, caractérisé en ce que le liant réactif est mélangé de façon uniforme à des micropores de l'ordre d'environ 0,01 µ à environ 5 µ, éventuellement dans un mélangeur à haute turbulence et/ou grâce à l'utilisation d'additifs tensio-actifs, puis le liant réactif mélangé aux micropores est lui-même mélangé à un ou plusieurs granulats qui ne contiennent pas de fractions très fines d'une grosseur de grain < 0,2 mm, de préférence < 0,25 mm.
